# EUROPEAN PATENT SPECIFICATION

(11) **EP 3 075 110 B1**
(45) Date of publication and mention of the grant of the patent: **10.01.2018**
(21) Application number: 13795521.7
(22) Date of filing: 27.11.2013
(51) Int. Cl.: H04L 12/801

(54) **CONTROLLING A TRANSMISSION CONTROL PROTOCOL WINDOW SIZE**
STEUERUNG DER FENSTERGRÖSSE EINES ÜBERTRAGUNGSSTEUERUNGSPROTOKOLLS
CONTRÔLE DE DIMENSION DE FENÊTRE DE PROTOCOLE DE CONTRÔLE DE TRANSMISSION

(43) Date of publication of application: 05.10.2016
(73) Proprietor: Telefonaktiebolaget LM Ericsson (publ), 164 83 Stockholm (SE)
(72) Inventor: ENGLUND, Lars G, SE-192 55 Sollentuna (SE); NYLANDER, Tomas, SE-139 34 Värmdö (SE)
(74) Representative: Ericsson
(86) International application number: PCT/EP2013/074820
(87) International publication number: WO 2015/078492

(56) References cited:
- JI ZHANG ET AL: "TCP Quick-Adjust by Utilizing Explicit Link Characteristic Information", ADVANCED INFORMATION NETWORKING AND APPLICATIONS - WORKSHOPS, 2008. AINAW 2008. 22ND INTERNATIONAL CONFERENCE ON, IEEE, PISCATAWAY, NJ, USA, 25 March 2008 (2008-03-25), pages 1291-1298, XP031240993, ISBN: 978-0-7695-3096-3
- FLOYD M ALLMAN ICIR A JAIN F5 NETWORKS P SAROLAHTI NOKIA RESEARCH CENTER S: "Quick-Start for TCP and IP; rfc4782.txt", 20070101, January 2007 (2007-01), XP015055062, ISSN: 0000-0003

## Description

### Field of the Invention

The invention relates to the field of controlling a window size using Transmission Control Protocol.

### Background to the Invention

The Transmission Control Protocol (TCP) is one of the most commonly used transport protocols in IP-based communication networks, such as the Internet. TCP provides reliability on top of the unreliable IP protocol, in-order delivery of data and a network congestion control mechanism to be outlined later. TCP is the primary end-to-end transport layer protocol in the Internet for non-real time data including data arising from e.g., web browsing, file-downloading and e-mail applications. The TCP layer is above the IP layer, the link layer and the physical layer, and below the application layer.

TCP uses a sliding window protocol to control a rate of sent data. A TCP sending node's window defines what the sender can send, and is based on a TCP receiving node's advertised or offered window (rwnd) and a congestion window (cwnd) calculated by the sender in the congestion control algorithm. The size of the TCP sending node's window is defined as the minimum of the receiver window (rwnd) and the congestion window (cwnd).

When the TCP sending node receives an acknowledgement (ACK) from the TCP receiving node, it can transmit as many new segments as were acknowledged. The new segments move towards the TCP receiving node and they are later acknowledged. The spacing of the ACKs determines the rate at which new packets are sent. This property is known as self-clocking, in which a TCP sending node sends packets to a TCP receiving node, which sends acknowledgements. Congestion is caused by a bigger 'pipe' at the TCP sending node feeding a smaller 'pipe' on the downlink to the TCP receiving node. The rate at which the packets flow through the downlink is also the rate at which the ACKs are sent back to the sender.

A TCP header is used to carry information about parameters such as window size, packet sequence number, acknowledgement number and so one. There are also options to enhance performance, e.g. a time stamp option giving a Round Trip Time (RTT) estimate, maximum segment size (MSS) and Selective Acknowledgements (SACK). Indications about use of options are in most cases only transmitted during the initial SYN and SYN/ACK phase of a 3-way-handshake performed to establish the TCP connection. The TCP ACKs sent from the TCP receiving node to the TCP sending node contain no data but the header itself (20 bytes), and possible options (max 40 bytes).

An end-point in the network cannot know the true pipe capacity (PC) for the TCP connection; instead it has to probe the PC and to find the bottleneck rate. TCP uses three types of input to determine congestion; An ACK indicates that more bandwidth is available, if a packet is dropped it is indicative of light congestion, and if many packets are dropped or time out, it is indicative of serious congestion. TCP acts on these signals by changing the send window or by starting over with the initial settings (the slow-start mechanism).

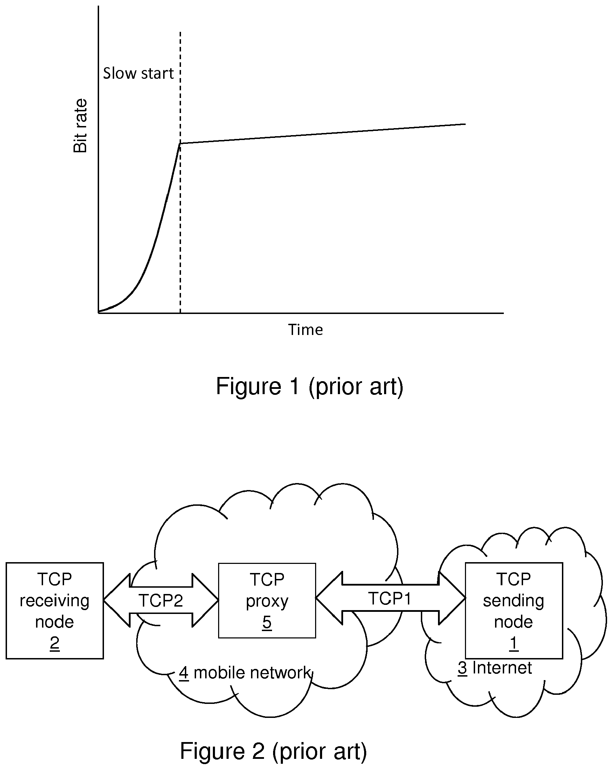

Congestion control in TCP uses four main algorithms: slow-start, congestion avoidance, fast-retransmit and fast-recovery algorithms. The slow-start algorithm and the congestion avoidance algorithm are independent algorithms with different objectives, although in practice they are implemented together. The slow start algorithm is specified in RFC 5681, and illustrated in Figure 1. Initially the sending rate of data is practically zero. The slow start algorithm increases the TCP congestion window each time an ACK is received by the number of segments acknowledged. When an ACK is not received, or a predetermined ceiling is reached, the transmission of data moves into the congestion avoidance phase.

A problem with the TCP slow start mechanism is that the end user Quality of Experience (QoE) is not optimized initially. This may be a problem depending on the type of data being sent. For example, the congestion avoidance window at the start of a slow start phase may be too small to allow data to be transmitted at a sufficient rate to provide adequate QoE for sending real time video.

A further problem is that when the end user accesses the Internet (or other network) via a mobile network, and conditions in the mobile network are good, the mobile network does not fully utilize its resources as the slow start mechanism limits the initial bit rate of a data stream.

Figure 2 shows an exemplary network architecture that includes a TCP sending node 1 and a TCP receiving node 2. In this example, the TCP sending node is located in the Internet 3 and the TCP receiving node 2 accesses the network via a mobile network 4. In order to reduce the RTT, it is known to implement a TCP proxy 5 between the TCP sending node 1 and the TCP receiving node 2. The TCP connection is split into two legs; TCP1 is established between the TCP sending node 1 and the TCP proxy 5, and terminates at the TCP proxy 5. Acknowledgements are transmitted back to the TCP sending node 1 from the TCP proxy 5. From the TCP proxy 5, another TCP connection, TCP2, is set up towards the TCP receiving node 2. Each TCP connection, TCP1 and TCP2, has its own flow control loop. This architecture is termed Split TCP, and reduces the RTT. The TCP proxy 5 may be located at one of several interfaces within or outside the mobile network. For example, in a Long Term Evolution (LTE) network, the TCP proxy 5 may be located at the SGi interface between a TCP Server and a Public Data Network Gateway (PGW). The network may include a node that provides service aware functionality that, depending on the services performs different actions. For example, service aware functionality allows an end user flow to be optimized, or changes the resolution of pictures etc. depending on conditions in the mobile network and the type of service. This type of service aware functionality may be placed in a service aware node for example located in an operator's network.

TCP proxies 5 are commonly used, but lead to a further problem with the slow-start mechanism. Each TCP proxy 5 located between the TCP sending node 1 and the TCP receiving node 2 increases the latency of packets, as they take some time to process and forward the packets. WO2004/091151 describes a method for dynamically altering TCP parameters for the congestion avoidance mechanism, but is not concerned with the slow start mechanism.

The document "TCP Quick-Adjust by Utilizing Explicit Link Characteristics Information" to Ji Zhang et al., Advanced Information Networking and Applications - Workshops, 2008, Ainaw 2008. 22nd International Conference on, IEEE, Piscataway, NJ, USA 25 March 2008, discloses an investigation on utilization of explicit bottleneck link characteristic information in order to enhance TCP behaviors, wherein there is proposed a TCP Quick-Adjust algorithm as extension of TCP Quick-Start, to allow end nodes to quickly adjust their sending rate for ongoing connections according to the reported bottleneck link bandwidth.

### Summary of the Invention

It is an object to improve an end-user's QoE during the slow start phase. According to a first aspect, there is provided a method of controlling a Transmission Control Protocol (TCP) window size for data sent from a TCP sending node via a mobile network. The TCP sending node receives a TCP request message from a remote node requesting a TCP data stream. The TCP request message includes a parameter relating to the presence of a TCP proxy node. The TCP sending node uses the parameter to determine an initial permissible window size for a TCP slow start mechanism. It can then send the TCP data stream towards a TCP receiving node using the slow start mechanism starting with the initial permissible window size. An advantage of this is that the slow start phase stars with a higher window size, and consequently data is initially sent to the TCP receiver at a higher bit rate. This improves the end-user's QoE, especially in cases where the service carried using TCP requires a high bit rate.

As an option, the remote node is selected from any of a TCP proxy node and a TCP receiving node.

The remote node is optionally located in the mobile network. For example, an eNodeB or a core network node in the mobile network may send the parameter.

The TCP sending node is optionally selected from any of a TCP server, a TCP proxy node and a UE.

As an option, the TCP sending node maps a value of the received parameter to the initial permissible window size.

The TCP request message is optionally a TCP SYN, in which case the parameter may be included in a TCP option.

According to a second aspect, there is provided a method of providing information to a TCP sending node for controlling a TCP window size for TCP data sent to a TCP receiving node via a mobile network. A remote node sends a TCP request message to the TCP sending node requesting a TCP data stream. The TCP request message includes a parameter relating to the presence of a TCP proxy node for determining an initial permissible window size for a TCP slow start mechanism. An advantage of this is that the TCP sending node can use the received parameter to determine an initial permissible window size for a TCP slow start mechanism.

Optional examples of the remote node include a TCP proxy node and a TCP receiving node. Furthermore, the remote node may be any node in the mobile network.

According to a third aspect, there is provided a TCP sending node for use in a communication network. The TCP sending node is provided with a receiver arranged to receive from a remote node a TCP request message requesting a TCP data stream to be sent to a TCP receiving node via a mobile network. The TCP request message includes a parameter relating to the presence of a TCP proxy node. A processor is provided, arranged to use the parameter to determine an initial permissible window size for a TCP slow start mechanism. A transmitter is provided, arranged to send the TCP data stream towards the TCP receiving node using the slow start mechanism, and starting with the initial permissible window size.

The TCP sending node is optionally selected from any of a TCP server, a TCP proxy node and a UE.

As an option, the TCP sending node further comprises a database containing data mapping parameter values to corresponding initial permissible window sizes.

According to a fourth aspect, there is provided a remote node for use in a communication network method, the remote node arranged to provide information to a TCP sending node for controlling a TCP window size for TCP data sent to a TCP receiving node via a mobile network. The remote node is provided with a transmitter arranged to send to the TCP sending node a TCP request message requesting a TCP data stream, the TCP request message including a parameter relating to the presence of a TCP proxy node for determining an initial permissible window size for a TCP slow start mechanism. As an option, the node is selected from any of a TCP proxy node and a TCP receiving node.

As an option, the node is located in the mobile network.

According to a fifth aspect, there is provided a computer program comprising computer readable code which, when run on a computer device, causes the computer device to perform the steps described above in any of the first and second aspects.

According to a sixth aspect, there is provided a computer program product comprising a non-transitory computer readable medium and a computer program described above in the fifth aspect, wherein the computer program is stored on the computer readable medium.

### Brief Description of the Drawings

Figure 1 is a graph showing a known TCP slow start mechanism;
Figure 2 illustrates schematically in a block diagram a known exemplary network architecture where a TCP proxy is disposed between a TCP sending node and a TCP receiving node;
Figure 3 is a graph showing an exemplary TCP slow start mechanism;
Figure 4 is a flow diagram showing exemplary steps;
Figure 5 is a flow diagram showing further exemplary steps;
Figure 6 is a signalling diagram showing signalling for a first example;
Figure 7 is a signalling diagram showing signalling for a second example;
Figure 8 illustrates schematically in a block diagram an exemplary TCP sending node; and
Figure 9 illustrates schematically in a block diagram an exemplary node for providing information to a TCP sending node.

### Detailed Description

The terms TCP sending node 1 and TCP receiving node 2 are used herein to describe the endpoints for a TCP data stream. Note that in most cases, the TCP receiving node 2 will be attached to a mobile network 4 but it is envisaged that the TCP sending node 1 may be attached to a mobile network. It should also be noted that the TCP sending node 1 may be a TCP proxy 5 splitting the TCP connection into two or more legs.

The term "mobile network" is used herein to refer to both the Radio Access Network (RAN) and parts of the core network that are responsible for actions relating to access such as establishing bearers, handling QoE and QoS requirements, allocating IP addresses, handling subscription data and charging, and so on. While congestion is more likely to be encountered in the RAN rather than the core network, core network nodes may be able to monitor conditions in the RAN or other factors that may affect the initial permissible window size.

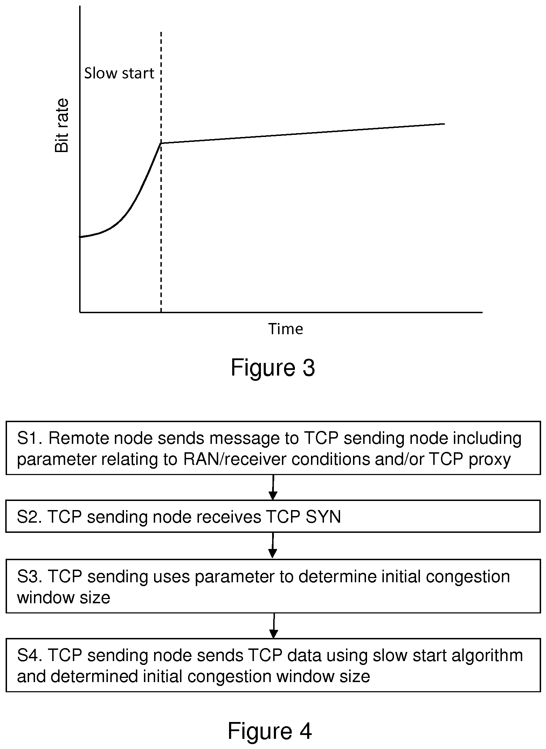

The TCP sending node 1 is provided with information so that it can select a permissible initial permissible congestion window size for a slow start mechanism when sending TCP data. This allows the slow start mechanism to select an initial permissible congestion window size that allows the initial data bit rate to be higher than a standard initial window size if conditions allow this. This is illustrated in Figure 3, where an initial permissible congestion window size is selected by the TCP sending node such that the initial bit rate is substantially higher than initial bit rate of a standard TCP slow start mechanism, as shown in Figure 1. An advantage of this is that the TCP receiving node starts receiving data at a higher bit rate and so the end user's QoE is not affected so much by the slow start mechanism. Note that references to the bit rate refer to the average bit rate; the bit rate at any given time fluctuates around an average value.

There are various types of information that can allow the TCP sending node 1 to select a different permissible initial window size. The TCP sending node 1 may be informed about conditions in the mobile network 4 or at the TCP receiving node 2 (for example, a UE). Where the conditions are favorable, the TCP sending node 1 may select a higher initial permissible congestion window size allowing the slow start mechanism to start sending TCP data at a higher bit rate. There may be other factors that affect whether or not the TCP sending node 1 uses the initial permissible congestion window size.

The TCP sending node 1 may elect to ignore the information and start a standard slow-start mechanism.

Furthermore, the presence of a TCP proxy 5 may allow the initial permissible congestion window size to be larger, as the TCP proxy 5 can buffer data packets. In this case it may be sufficient to inform the TCP sending node 1 of the existence of the TCP proxy 5.

Note that the initial permissible congestion window size may be determined on the basis of a combination of both the conditions in the mobile network/TCP receiving node 2, and the presence of the TCP proxy 5.

An exemplary way to provide the TCP sending node 1 with information relating to conditions in the mobile network/TCP receiving node 2 and/or the presence of a TCP proxy 5 located between the TCP sending node 1 and the TCP receiving node is to include the information in a TCP option that is understood by the TCP sending node 1.

Figure 4 is a flow diagram showing exemplary steps, with the following numbering corresponding to that of Figure 4:
S1. A remote node (which may be, for example, a TCP proxy, a node in the mobile network or another node that provides service aware functions between the mobile network and the network in which the TCP sending node 1 is located) sends a request message to the TCP sending node 1. The request message includes a parameter indicating conditions in the mobile network/TCP receiving node 2 and/or the presence of a TCP proxy 5. Examples of conditions in the mobile network include cell load, number of active UEs, buffer load, total eNB load, and a Channel Quality Indicator (CQI). It will be appreciated that other indications of conditions in the mobile network can be used. These exemplary conditions may be provided in the parameter alone or in any combination, or abstracted as a value usable by the TCP sending node 1.
S2. The TCP sending node 1 receives the request message including the parameter.
S3. The TCP sending node 1 uses the parameter to determine an initial permissible congestion window size for the slow start mechanism. The determination may be made in a number of ways. For example, the parameter value may be mapped to a predetermined initial permissible congestion window size.
S4. The TCP sending node 1 starts sending TCP data towards the TCP receiving node 2 using the slow start algorithm, but starting at the determined initial permissible congestion window size.
The above description refers to adjusting the TCP initial congestion window size in any type of network. For example, mobile network conditions in other types of network, such networks using Wideband Code Division Multiple Access (WCDMA) or Wi-Fi may use the same principles to optimize the TCP initial congestion window.

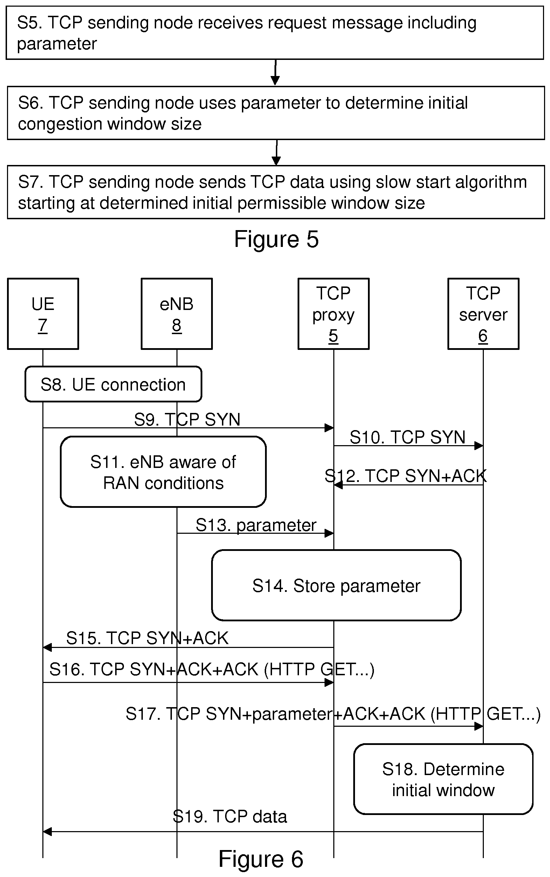

Figure 5 shows exemplary steps at the TCP sending node 1, with the following numbering corresponding to that of Figure 5:
S5. The TCP sending node 1 receives from a remote node a TCP request message requesting a TCP data stream. The request message includes a parameter relating to any of conditions in the mobile network and the presence of a TCP proxy node.
S6. Using the parameter, the TCP sending node 1 determines an initial permissible window size for a TCP slow start mechanism.
S7. The TCP sending node 1 sends a TCP data stream towards the TCP receiving node 2 using the TCP slow-start mechanism, and starting with the initial permissible window size.

By way of example, consider the case where the TCP sending node 1 is a TCP server 6 and the TCP receiving node 2 is a UE 7. The UE attaches using an LTE network via an eNodeB (eNB) 8. A TCP proxy 5 is located between the TCP server 6 and the eNB 8, although it will be appreciated that while the remote node in this example is a TCP proxy 5, it could alternatively be another node that provides service aware functions between the eNB 8 and the TCP server 6. In this example, the TCP server 6 is informed about conditions in the mobile network.

Figure 6 is a signalling diagram showing exemplary signalling for the above case, with the following numbering corresponding to that of Figure 6:
S8. The UE 7 connects to the eNB 8 and a bearer is established with the mobile network 4.
S9. The UE 7 initiates a TCP connection by sending a TCP SYN towards the TCP server 6 via the TCP proxy 5. The TCP proxy 5 intercepts this TCP SYN message. If the TCP proxy 5 is operating in transparent mode, then it intercepts the TCP SYN message without the UE 7 being aware of the interception. Alternatively, the TCP proxy 5 may have an address to which the UE 7 addresses the TCP SYN.
S10. The TCP proxy 5 initiates a TCP connection towards the TCP server 6.
S11. At the first user plane message involving the UE, the eNB 8 obtains the UE IP address, which is a common identifier between the mobile network 4 and the TCP proxy 5 in this example. In this example, this message is a TCP message, but need not be. For example, it could be a DNS query from the UE to obtain the IP address for the TCP server 6. The eNB 8 is aware of the UE 7 radio conditions from earlier communication with the UE 7, e.g. reporting from the UE 7 as part of the Radio Resource Control (RRC) or/and from CQI reporting.
S12. The TCP server 6 acknowledges the TCP SYN.
S13. The eNB 8 sends a parameter to the TCP proxy 5, informing it about UE 7 radio conditions and status on the eNB 8 (e.g. cell load, number of active UEs in the scheduler). Note the parameter may be mapped to, say, three values, good/average/bad, meaning that there are three different sizes for the initial transmit window.
S14. The TCP proxy 5 stores the parameter.
S15. The TCP proxy acknowledges the UE 7 TCP SYN.
S16. The UE 7 completes the three-way handshake and requests TCP data from the TCP server 6.
S17. The TCP proxy 5 includes the parameter relating to the initial permissible congestion window size as a TCP option when building up a TCP message to send to the TCP server 6.
S18. The TCP server 6 uses the received parameter to determine an appropriate initial permissible congestion window size for sending TCP data towards the UE 7.
S19. The TCP server 6 sends TCP data towards the UE 7 via the TCP proxy 5, using a TCP slow start mechanism but starting with the determined initial permissible congestion window size.

The order of TCP messages shown in Figure 6 for the two different TCP legs (one between the UE 7 and the TCP proxy 5 and the other between the TCP proxy 5 and the TCP server 6) may be varied from the example of Figure 6. However, the TCP server 6 must receive the parameter either before or with message S17 so that the determined initial permissible congestion window size can be used when serving the received HTTP GET. If the parameter is not available for the first TCP SYN, it may be used in subsequent TCP streams if the parameter is available at that time. There are several ways that information from the mobile network 4 to the TCP proxy 5 (or other remote node that communicates the parameter to the TCP server 6) can be sent. Examples include using a new protocol between the mobile network 4 and TCP proxy 5 on a dedicated outband signaling connection, using a new protocol between the mobile network 4 and the TCP proxy 5 inserted on the actual user plane flow, and using a new protocol using existing unused flags and bits in the IP and TCP headers, e.g. using the IP options in the IP header. The skilled person will appreciate that these examples are not exhaustive, and there are other methods to convey the information.

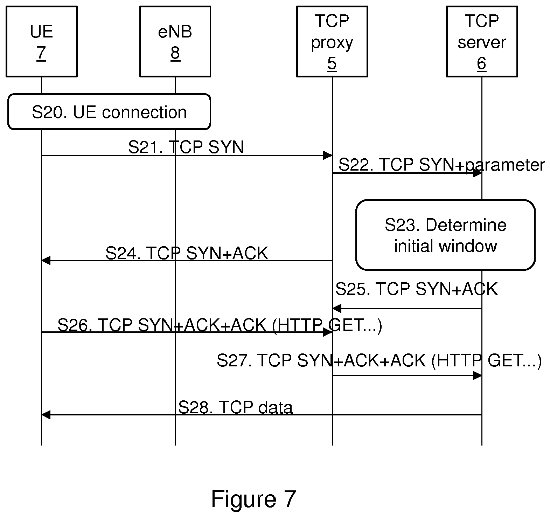

Consider now the case where the initial permissible congestion window size is determined only on the basis that the TCP proxy 5 is present. Exemplary signalling is illustrated in Figure 7, with the following numbering corresponding to that of Figure 7.
S20. The UE 7 connects to the eNB 8 and a bearer is established with the mobile network.
S21. The UE 7 initiates a TCP connection by sending a TCP SYN towards the TCP server 6 via the TCP proxy 5.The TCP SYN is intercepted by the TCP proxy 5. If the TCP proxy 5 is operating in transparent mode, then it intercepts the TCP SYN message without the UE 7 being aware of the interception. Alternatively, the TCP proxy 5 may have an address to which the UE 7 addresses the TCP SYN.
S22. The TCP proxy 5 initiates a TCP connection towards the TCP server 6 and includes in the TCP SYN a TCP option that includes a parameter indicating the presence of the TCP proxy 5.
S23. The TCP server 6 uses the received parameter to determine an appropriate initial permissible congestion window size for sending TCP data towards the UE 7.
S24. The TCP proxy 5 acknowledges the UE 7 TCP SYN.
S25. The TCP server 6 acknowledges the TCP SYN of S22.
S26. The UE 7 completes the three-way handshake and requests TCP data from the TCP server 6.
S27. The TCP proxy 5 completes the three-way handshake with the TCP server 6 including an HTTP GET.
S28. The TCP server 6 sends TCP data towards the UE 7 via the TCP proxy 5, using a TCP slow start mechanism but starting with the initial permissible congestion window size that was determined in step S23.

As was the case for Figure 6, the order of TCP messages shown in Figure 7 for the two different TCP legs (one between the UE 7 and the TCP proxy 5 and the other between the TCP proxy 5 and the TCP server 6) may be varied. The TCP server 6 must receive the parameter either before or with message S27 so that the determined initial permissible congestion window size can be used when serving the received HTTP GET.

Note also that it is possible to combine the signalling of Figure 6 and 7, such that the initial permissible congestion window size is determined on the basis of both the presence (if any) of the TCP proxy 5, and the conditions in the mobile network 4. Both pieces of information may be included in a single information element.

The description of Figures 6 and 7 assumes an LTE network, but the skilled person will easily be able to adapt the teachings to different types of communication network.

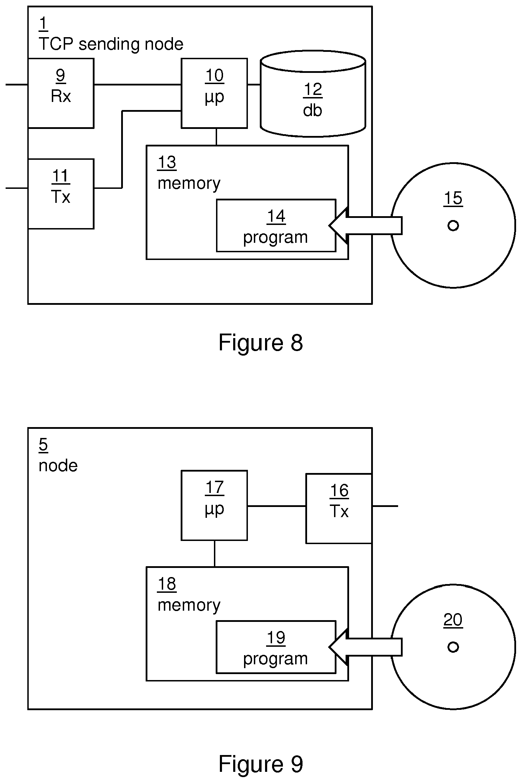

Figure 8 herein illustrates schematically an exemplary TCP sending node 1. The TCP sending node 1 is provided with a receiver arranged to receive from a remote node (such as a TCP proxy 5) a TCP request message requesting a TCP data stream to be sent to the TCP receiving node 2 via the mobile network 4. The TCP request message includes the parameter relating to conditions in the mobile network and/or the presence of the TCP proxy 5. A processor 10 is provided that is arranged to use the parameter to determine an initial permissible window size for a TCP slow start mechanism. A transmitter is also provided arranged to send towards the TCP receiving node 2 a TCP data stream using the slow start mechanism starting with the initial permissible window size. The TCP sending node 1 may be provided with a database 12 containing data that is used to map parameter values to corresponding initial permissible window sizes.

A non-transitory computer readable medium in the form of a memory 13 may also be provided. The memory 13 may be used to store information such as the database 12, or a program 14 which, when executed by the processor 10, causes the TCP sending node 1 to behave as described above. Note that the program may be provided on an external non-transitory computer readable medium 15, such as a disk or flash drive.

Figure 9 herein illustrates an exemplary node for providing information to the TCP sending node 1. Examples of the exemplary node include the TCP proxy 5, a mobile network node such as the eNB 8 or a TCP receiving node 2 such as the UE 7. Assuming that the node is a TCP proxy 5, it is provided with a transmitter 16 arranged to send to a TCP sending node a request message, the request message including a parameter relating to conditions in the mobile network and/or the presence of the TCP proxy 5. A processor 17 is also provided for controlling the node. A non-transitory computer readable medium in the form of a memory 18 may also be provided. The memory 18 may be used to store a program 19 which, when executed by the processor 17, causes the node to behave as described above. Note that the program 19 may be provided on an external non-transitory computer readable medium 20, such as a disk or flash drive.

The techniques and apparatus described above allow the initial congestion window size when sending TCP data using a slow start mechanism to be increased if conditions allow. This improves TCP performance and has a positive impact on the end user's QoE. Conditions that might lead to a larger initial permissible congestion window size include the presence of one or more TCP proxies, and favourable conditions in the mobile network 4 or at the TCP receiving node 2.

It will be appreciated by a person skilled in the art that various modifications may be made to the embodiments described above without departing from the scope of the present invention as defined by the appended claims.

The following abbreviations have been used in the description:
- ACK: Acknowledgement
- CQI: Channel Quality Indicator
- eNB: eNodeB
- LTE: Long Term Evolution
- MSS: Maximum Segment Size
- O&M: Operation and Maintenance
- PC: Pipe Capacity
- PGW: Public Data Network Gateway
- QoE: Quality of Experience
- QoS: Quality of Service
- RAN: Radio Access Network
- RRC: Radio Resource Control
- RTT: Round Trip Time
- SACK: Selective Acknowledgement
- SYN: synchronize
- TCP: Transmission Control Protocol
- UE: User Equipment
- WCDMA: Wideband Code Division Multiple Access

## Claims

1. A method of controlling a Transmission Control Protocol, TCP, window size for data sent from a TCP sending node (1) via a mobile network, the method comprising, at the TCP sending node (1):
receiving (S2) from a remote node a TCP request message requesting a TCP data stream, the TCP request message including a parameter relating to the presence of a TCP proxy node (5);
using (S3) the parameter, determining an initial permissible window size for a TCP slow start mechanism;
sending (S4) towards a TCP receiving node the TCP data stream using the slow start mechanism starting with the initial permissible window size.

2. The method according to claim 1, wherein the remote node is selected from any of a TCP proxy node (5) and a TCP receiving node (2).

3. The method according to claim 1 or 2, wherein the remote node is located in the mobile network (4).

4. The method according to any one of claims 1, 2 or 3, wherein the TCP sending node (1) is selected from any of a TCP server (6), a TCP proxy node and a User Equipment (7).

5. The method according to any one of claims 1 to 4, further comprising mapping a value of the received parameter to the initial permissible window size.

6. The method according to any one of claims 1 to 5, wherein the TCP request message is a TCP SYN, and the parameter is included in a TCP option.

7. A method of providing information to a Transmission Control Protocol, TCP, sending node (1) for controlling a TCP window size for TCP data sent to a TCP receiving node via a mobile network (4), the method comprising, at a remote node:
sending (S1) to the TCP sending node a TCP request message requesting a TCP data stream, the TCP request message including a parameter relating to the presence of a TCP proxy node (5) for determining an initial permissible window size for a TCP slow start mechanism.

8. The method according to claim 7, wherein the remote node is selected from any of a TCP proxy node (5) and a TCP receiving node (2).

9. A Transmission Control Protocol, TCP, sending node (1) for use in a communication network, the TCP sending node (1) comprising:
a receiver (9) arranged to receive from a remote node a TCP request message requesting a TCP data stream to be sent to a TCP receiving node (2) via a mobile network (4), the TCP request message including a parameter relating to the presence of a TCP proxy node;
a processor (10) arranged to use the parameter to determine an initial permissible window size for a TCP slow start mechanism;
a transmitter (11) arranged to send towards the TCP receiving node (2) the TCP data stream using the slow start mechanism starting with the initial permissible window size.

10. The TCP sending node (1) according to claim 9, wherein the TCP sending node is selected from any of a TCP server, a TCP proxy node and a User Equipment.

11. The TCP sending node (1) according any one of claims 9 or 10, further comprising a database (12) containing data mapping parameter values to corresponding initial permissible window sizes.

12. A remote node (5) for use in a communication network method, the remote node arranged to provide information to a Transmission Control Protocol, TCP, sending node for controlling a TCP window size for TCP data sent to a TCP receiving node via a mobile network, the remote node comprising a transmitter (16) arranged to send to the TCP sending node a TCP request message requesting a TCP data stream, the TCP request message including a parameter relating to the presence of a TCP proxy node for determining an initial permissible window size for a TCP slow start mechanism.

13. The node according to claim 11, wherein the node is selected from any of a TCP proxy node and a TCP receiving node.

14. A computer program (14; 19), comprising computer readable code which, when run on a computer device (1; 5), causes the computer device to perform the steps of any one of claims 1 to 8.

15. A computer program product (13; 15; 18; 20) comprising a non-transitory computer readable medium and a computer program (15; 20) according to claim 14, wherein the computer program is stored on the computer readable medium.

## Patentansprüche

1. Verfahren zum Steuern einer Übertragungssteuerungsprotokoll-, TCP (Transmission Control Protocol), -Fenstergröße für Daten, die von einem TCP-Sendeknoten (1) über ein mobiles Netzwerk gesendet werden, das Verfahren umfassend, beim TCP-Sendeknoten (1):
Empfangen (S2) einer TCP-Anfragenachricht, die einen TCP-Datenstrom anfragt, von einem entfernten Knoten, wobei die TCP-Anfragenachricht einen Parameter bezüglich der Gegenwart eines TCP-Proxyknotens (5) enthält;
unter Verwendung (S3) des Parameters, Ermitteln einer anfangs zulässigen Fenstergröße für einen TCP-Langsamstartmechanismus;
Senden (S4) hin zu einem TCP-Empfangsknoten des TCP-Datenstroms unter Verwendung des Langsamstartmechanismus, beginnend mit der anfangs zulässigen Fenstergröße.

2. Verfahren nach Anspruch 1, wobei der entfernte Knoten aus einem von einem TCP-Proxyknoten (5) und einem TCP-Empfangsknoten (2) ausgewählt ist.

3. Verfahren nach Anspruch 1 oder 2, wobei der entfernte Knoten im mobilen Netzwerk (4) gelegen ist.

4. Verfahren nach einem der Ansprüche 1, 2 oder 3, wobei der TCP-Sendeknoten (1) aus einem von einem TCP-Server (6), einem TCP-Proxyknoten und einer Benutzerausrüstung (7) ausgewählt ist.

5. Verfahren nach einem der Ansprüche 1 bis 4, weiter umfassend ein Abbilden eines Werts des empfangenen Parameters auf die anfangs zulässige Fenstergröße.

6. Verfahren nach einem der Ansprüche 1 bis 5, wobei die TCP-Anfragenachricht ein TCP SYN ist und der Parameter in einer TCP-Option enthalten ist.

7. Verfahren zum Bereitstellen von Informationen an einen Übertragungssteuerungsprotokoll-, TCP, -Sendeknoten (1) zum Steuern einer TCP-Fenstergröße für TCP-Daten, die über ein mobiles Netzwerk (4) an einen TCP-Empfangsknoten gesendet werden, das Verfahren umfassend, bei einem entfernten Knoten:
Senden (S1) einer TCP-Anfragenachricht an den TCP-Sendeknoten, die einen TCP-Datenstrom anfragt, wobei die TCP-Anfragenachricht einen Parameter bezüglich der Gegenwart eines TCP-Proxyknotens (5) zum Ermitteln einer anfangs zulässigen Fenstergröße für einen TCP-Langsamstartmechanismus enthält.

8. Verfahren nach Anspruch 7, wobei der entfernte Knoten aus einem von einem TCP-Proxyknoten (5) und einem TCP-Empfangsknoten (2) ausgewählt ist.

9. Übertragungssteuerungsprotokoll-, TCP, -Sendeknoten (1) zur Verwendung in einem Kommunikationsnetzwerk, der TCP-Sendeknoten (1) umfassend:
einen Empfänger (9), der zum Empfangen einer TCP-Anfragenachricht, die einen über ein mobiles Netzwerk (4) an einen TCP-Empfangsknoten (2) zu sendenden TCP-Datenstrom anfragt, von einem entfernten Knoten angeordnet ist, wobei die TCP-Anfragenachricht einen Parameter bezüglich der Gegenwart eines TCP-Proxyknotens enthält;
einen Prozessor (10), der angeordnet ist, den Parameter zum Ermitteln einer anfangs zulässigen Fenstergröße für einen TCP-Langsamstartmechanismus zu verwenden;
einen Sender (11), der angeordnet ist, den TCP-Datenstrom unter Verwendung des Langsamstartmechanismus hin zum TCP-Empfangsknoten (2) zu senden, beginnend mit der anfangs zulässigen Fenstergröße.

10. TCP-Sendeknoten (1) nach Anspruch 9, wobei der TCP-Sendeknoten aus einem von einem TCP-Server, einem TCP-Proxyknoten und einer Benutzerausrüstung ausgewählt ist.

11. TCP-Sendeknoten (1) nach einem der Ansprüche 9 oder 10, weiter umfassend eine Datenbank (12), die Datenabbildungsparameterwerte zu entsprechenden anfangs zulässigen Fenstergrößen beinhaltet.

12. Entfernter Knoten (5) zur Verwendung in einem Kommunikationsnetzwerkverfahren, wobei der entfernte Knoten angeordnet ist, Informationen an einen Übertragungssteuerungsprotokoll-, TCP, -Sendeknoten zum Steuern einer TCP-Fenstergröße für TCP-Daten, die über ein mobiles Netzwerk an einen TCP-Empfangsknoten gesendet werden, bereitzustellen, der entfernte Knoten umfassend einen Sender (16), der angeordnet ist, eine TCP-Anfragenachricht an den TCP-Sendeknoten zu senden, die einen TCP-Datenstrom anfragt, wobei die TCP-Anfragenachricht einen Parameter bezüglich der Gegenwart eines TCP-Proxyknotens zum Ermitteln einer anfangs zulässigen Fenstergröße für einen TCP-Langsamstartmechanismus enthält.

13. Knoten nach Anspruch 11, wobei der Knoten aus einem von einem TCP-Proxyknoten und einem TCP-Empfangsknoten ausgewählt ist.

14. Computerprogramm (14; 19), umfassend einen rechnerlesbaren Code, der, wenn er auf einer Computervorrichtung (1; 5) läuft, die Computervorrichtung veranlasst, die Schritte eines der Ansprüche 1 bis 8 auszuführen.

15. Computerprogrammprodukt (13; 15; 18; 20), umfassend ein nicht-flüchtiges computerlesbares Medium und ein Computerprogramm (15; 20) nach Anspruch 14, wobei das Rechnerprogramm auf dem computerlesbaren Medium gespeichert ist.

## Revendications

1. Procédé de commande d'une taille de fenêtre de protocole de commande de transmission TCP pour des données envoyées d'un noeud d'envoi TCP (1) via un réseau mobile, le procédé comprenant au niveau du noeud d'envoi TCP (1) :
la réception (S2) depuis un noeud éloigné d'un message de demande TCP demandant un courant de données TCP, le message de demande TCP comprenant un paramètre se rapportant à la présence d'un noeud mandataire TCP (5) ;
l'utilisation (S3) du paramètre en déterminant la taille de fenêtre initiale autorisée pour un mécanisme de démarrage lent TCP ;
l'envoi (S4) vers un noeud récepteur TCP du courant de données TCP en utilisant le mécanisme de démarrage lent en partant de la taille de fenêtre initiale autorisée.

2. Procédé selon la revendication 1, dans lequel le noeud éloigné est choisi parmi l'un quelconque d'un noeud mandataire TCP (5) et d'un noeud récepteur TCP (2).

3. Procédé selon la revendication 1 ou 2, dans lequel le noeud éloigné est situé dans le réseau mobile (4).

4. Procédé selon l'une quelconque des revendications 1, 2 ou 3, dans lequel le noeud d'envoi TCP (1) est choisi parmi l'un quelconque d'un serveur TCP (6), d'un noeud mandataire TCP et d'un équipement utilisateur (7).

5. Procédé selon l'une quelconque des revendications 1 à 4, comprenant en outre le mappage d'une valeur du paramètre reçu à la taille de fenêtre initiale autorisée.

6. Procédé selon l'une quelconque des revendications 1 à 5, dans lequel le message de demande TCP est un SYN TCP et le paramètre est inclus dans une option TCP.

7. Procédé de fourniture d'informations à un noeud d'envoi (1) de protocole de commande de transmission TCP pour commander une taille de fenêtre TCP pour des données TCP envoyées à un noeud récepteur TCP via un réseau mobile (4), le procédé comprenant au niveau du noeud éloigné :
l'envoi (S1) au noeud d'envoi TCP d'un message de demande TCP demandant un courant de données TCP, le message de demande TCP comprenant un paramètre se rapportant à la présence d'un noeud mandataire TCP (5) pour déterminer une taille de fenêtre initiale autorisée pour un mécanisme de démarrage lent TCP.

8. Procédé selon la revendication 7, dans lequel le noeud éloigné est choisi parmi l'un quelconque d'un noeud mandataire TCP (5) et d'un noeud récepteur TCP (2).

9. Noeud d'envoi (1) de protocole de commande de transmission TCP pour utilisation dans un réseau de communication, le noeud d'envoi TCP (1) comprenant :
un récepteur (9) agencé pour recevoir d'un noeud éloigné un message de demande TCP demandant d'envoyer un courant de données TCP à un noeud récepteur TCP (2) via un réseau mobile (4), le message de demande TCP comprenant un paramètre se rapportant à la présence d'un noeud mandataire TCP ;
un processeur (10) agencé pour utiliser le paramètre afin de déterminer une taille de fenêtre initiale autorisée pour un mécanisme de démarrage lent TCP ;
un émetteur (11) agencé pour envoyer vers le noeud récepteur TCP (2) le courant de données TCP en utilisant le mécanisme de démarrage lent en partant de la taille de fenêtre initiale autorisée.

10. Noeud d'envoi TCP (1) selon la revendication 9, dans lequel le noeud d'envoi TCP est choisi parmi l'un quelconque d'un serveur TCP, d'un noeud mandataire TCP et d'un équipement utilisateur.

11. Noeud d'envoi TCP (1) selon l'une quelconque des revendications 9 ou 10, comprenant en outre une base de données (12) contenant des données mappant des valeurs de paramètres à des tailles de fenêtre initiales autorisées correspondantes.

12. Noeud éloigné (5) pour utilisation dans un procédé de réseau de communication, le noeud éloigné étant agencé pour fournir des informations à un noeud d'envoi de protocole de commande de transmission TCP pour commander une taille de fenêtre TCP pour des données TCP envoyées à un noeud récepteur TCP via un réseau mobile, le noeud éloigné comprenant un émetteur (16) agencé pour envoyer au noeud d'envoi TCP un message de demande TCP demandant un courant de données TCP, le message de demande TCP comprenant un paramètre se rapportant à la présence d'un noeud mandataire TCP pour déterminer une taille de fenêtre initiale autorisée pour un mécanisme de démarrage lent TCP.

13. Noeud selon la revendication 11, dans lequel le noeud est choisi parmi l'un quelconque d'un mandataire TCP et d'un noeud récepteur TCP.

14. Programme informatique (14 ; 19) comprenant un code lisible par ordinateur qui, lorsqu'il tourne sur un dispositif informatique (1 ; 5), amène le dispositif informatique à effectuer les étapes de l'une quelconque des revendications 1 à 8.

15. Produit de programmation informatique (13 ; 15 ; 18 ; 20) comprenant un support non transitoire lisible par ordinateur et un programme d'ordinateur (15; 20) selon la revendication 14, dans lequel le programme d'ordinateur est stocké sur le support lisible par ordinateur.
